# EUROPÄISCHE PATENTANMELDUNG

(11) **EP 2 333 372 A2**
(43) Veröffentlichungstag der Anmeldung: **15.06.2011**
(21) Anmeldenummer: 11154662.8
(22) Anmeldetag: 16.02.2011
(51) Int. Cl.: F16F 1/12

(54) **Ringfederstrang**

(30) Priorität: 17.05.2010 CH 7582010
(71) Anmelder: Baumann Federn AG, 8630 Rüti (CH)
(72) Erfinder: Hohl, Andreas, 8630 Rüti (CH); Kessler, Hans-Ueli, 8625 Gossau (CH)
(74) Vertreter: Irniger, Ernst

(57) **Zusammenfassung**

Zum Verbinden zweier Federenden (4,5) sind diese mindestens entlang eines Windungsabschnittes je der beiden Enden fest miteinander verbunden. Die Endwindungen können mittels Schweissen, Löten, Punktschweissen, Lichtbogenschweissen, etc. fest miteinander verbunden sein.

## Beschreibung

Die vorliegende Erfindung betrifft die Verbindung zweier Federenden gemäss dem Oberbegriff nach Anspruch 1, insbesondere einen Ringfederstrang sowie Verfahren zum Verbinden zweier Federenden bzw. die Herstellung eines Ringfederstrangs.

Federenden werden in der Regel hergestellt, indem die jeweiligen Enden mittels Schweissverbindung aneinander geschweisst werden. Da die Festigkeit gelegentlich insbesondere bei grosser Zugbelastung ungenügend ist wird auch vorgeschlagen, die beiden Enden zu überlappen und seitlich entlang eines Längsabschnittes zusammen zu schweissen. Aber auch diese Verbindung ist bei grosser Zugbelastung kritisch.

Es ist daher eine Aufgabe der vorliegenden Erfindung Federenden derart miteinander zu verbinden, dass auch bei hoher Zugbelastung ein Auseinanderreissen der Federenden weitgehendst verunmöglicht bzw. stark reduziert wird.

Erfindungsgemäss wird eine Verbindung zweier Federenden gemäss dem Wortlaut nach Anspruch 1 vorgeschlagen.

Vorgeschlagen wird, dass beim Verbinden zweier Federenden die beiden Enden mindestens entlang eines Windungsabschnittes miteinander verbunden sind.

Gemäss einer Ausführungsvariante wird gar vorgeschlagen, die beiden je zu einem Ring gebogenen Endwindungen weitgehendst entlang der beiden Windungen fest miteinander zu verbinden.

Dieses Verbinden kann beispielsweise mittels Schweissen, Löten, mittels Punktschweissen, mittels Lichtbogenschweissen, etc. erfolgen.

Die erfindungsgemässe Verbindung zweier Federenden ist insbesondere geeignet beim Herstellen eines Ringfederstanges, welcher zu einem Ring gebogen ist und dessen beide Enden untrennbar miteinander verbunden sind. Die erfindungsgemässe Verbindung ist dergestalt, dass sie Druck, Zug, Torsions- und Scherkräfte übertragen kann.

Analog dem oben vorgeschlagenen ist es selbstverständlich auch möglich, die Verbindung bei der Herstellung des Ringfederstranges als Schweiss- oder als Lötverbindung auszugestalten, wobei die Verbindung eine umlaufende Naht oder eine Serie von Punkten sein kann.

Die Windungen des Federstanges können radial ausgerichtet sein oder sie können in Umfangrichtung abgekippt sein.

Der Einsatz beispielsweise des erfindungsgemäss vorgeschlagenen Ringfederstranges ist vielfältig, insbesondere kann er eingesetzt werden als:
- Maschinenelement zur Ausübung einer Radialkraft auf einen Dorn bzw. Segmente eines Dornes,
- Maschinenelement zur Ausübung einer Radialkraft in einer Hülse, bzw. Segmente einer Hülse,
- Maschinenelement zur Verbindung einer Hülse mit einem Dorn, wobei die Oberfläche von Dorn und Hülse dabei glatt sein kann oder mit einer Nut ausgestattet, in welche der Federring einrastet.

Dabei sind die Varianten möglich, dass die Nut nur am Dorn oder nur an der Hülse oder auch an Dorn und Hülse angebracht ist.

Federring und Nuten können so gestaltet sein, dass die Verbindung mit einer definierten Kraft gelöst werden kann, oder dass die Verbindung nur durch Zerstörung der Verbindungselemente gelöst werden kann.

Die Erfindung wird nun beispielsweise und unter Bezug auf die beigefügten Figuren näher erläutert.

Dabei zeigen:
Figur 1 schematisch im Längsschnitt den Verbindungsbereich zweier Federenden
Figur 2 in Vergrösserung und Ausschnittsweise die Verbindung der beiden Federenden
Figur 3 die Verbindung der Federenden zur Herstellung eines Ringfederstranges, und
Figur 4 schematisch in Obendraufsicht einen Ringfederstrang hergestellt gemäss der vorliegenden Erfindung.

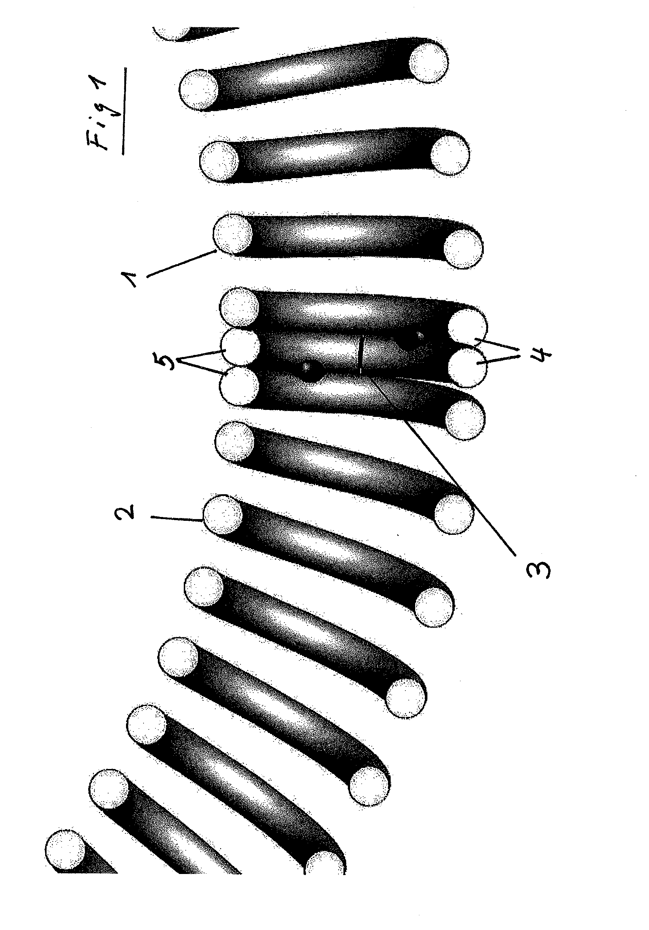

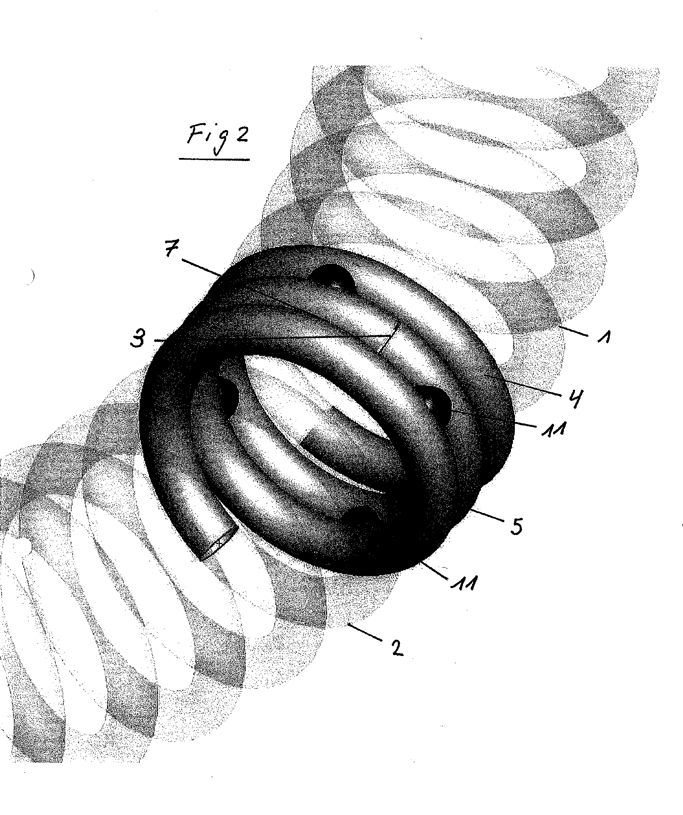

Figur 1 zeigt die Enden der beiden Federn 1 und 2, welche im Punkt 3 aneinander stossen. Statt, wie im Stand der Technik vorgeschlagen, lediglich im Bereich 3 des Aneinanderstossens die beiden Enden miteinander zu verschweissen, wird nun erfindungsgemäss vorgeschlagen, dass die beiden Endwindungen 4 und 5 der beiden Federn 1 und 2 entlang einer ganzen Windung miteinander verbunden werden, das heisst, es wird eine ringartige Verbindung 7 gebildet, wie in Figur 2 erkennbar.

Figur 2 zeigt detailliert das Bilden dieses Ringes 7, gebildet durch die beiden Endwindungen 4 und 5 der beiden Federenden 1 und 2. Zur Bildung der Ringverbindung 7 können beispielsweise Punktschweissungen 11 erzeugt werden, um das feste Aneinanderbinden der beiden Endwindungen 4 und 5 zu erzeugen.

Selbstverständlich können anstelle von Punktschweissungen die beiden Endwindungen entlang der ganzen Länge miteinander verschweisst werden, oder aber es ist möglich, eine Lötverbindung zwischen den beiden Endwindungen 4 und 5 zu erzeugen. Auf die Beschreibung der gewählten Löt- oder Schweissverbindung kann an dieser Stelle verzichtet werden, da derartige Methoden im Stand der Technik bestens bekannt sind.

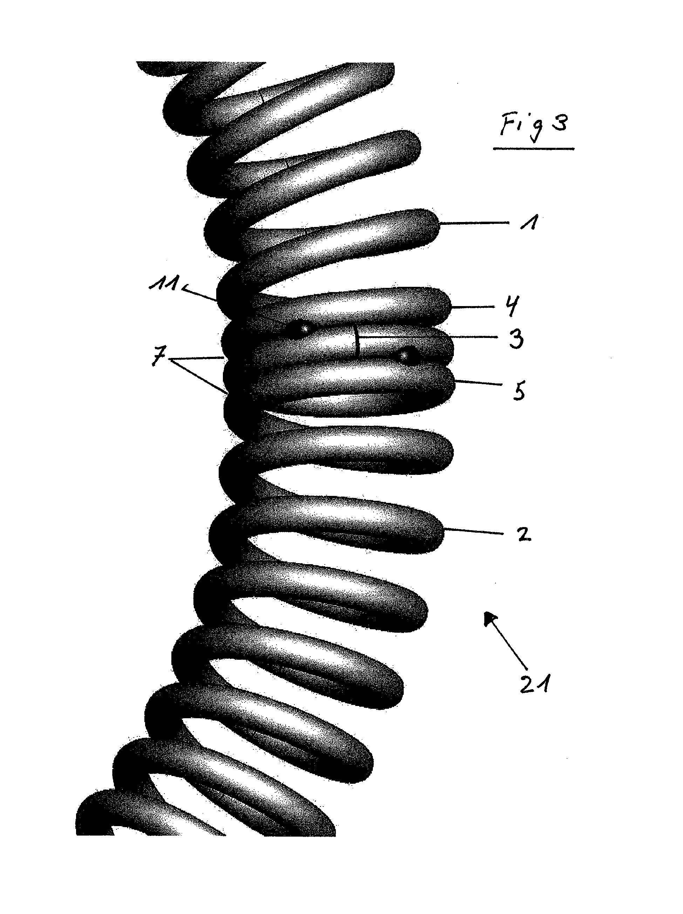

Figur 3 zeigt eine spezielle Verwendung der Verbindung wie dargestellt in den Figuren 1 und 2, für die Herstellung einer Ringfeder bzw. eines Ringfederstranges 21. Wiederum sind die beiden Federenden entlang der Endwindungen 4 und 5 zur Erzeugung eines Verbindungsringes 7 fest miteinander verbunden. Gemäss Darstellung in Figur 3 werden hierzu wieder Punktschweissungen 11 appliziert.

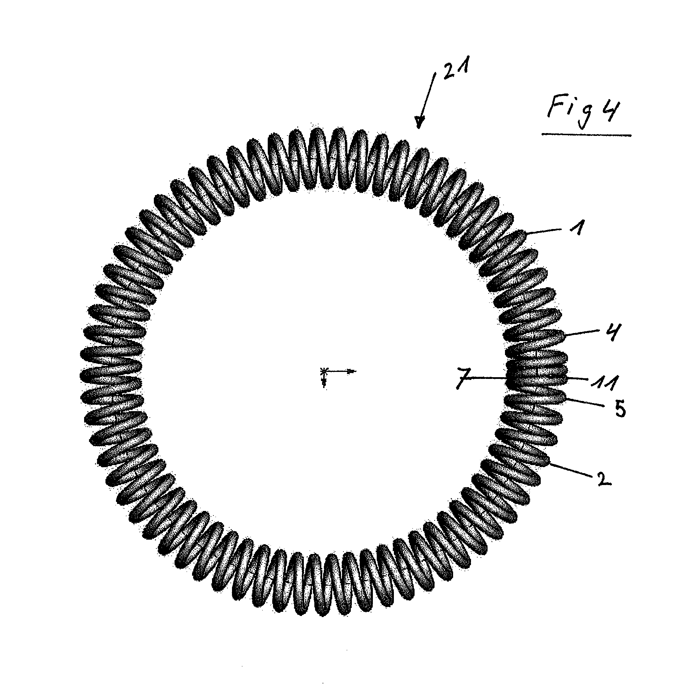

Figur 4 schliesslich zeigt die ganze Ringfeder bzw. den Ringfederstrang 21, welcher erzeugt wird durch das feste Verbinden der beiden Federenden 1 und 2 zur Bildung des Ringes 7, gebildet durch die beiden Endwindungen.

Die dargestellte Ringfeder ist selbstverständlich nur ein mögliches Beispiel für die Verwendung der erfindungsgemäss definierten Verbindung. In jedem Falle, wo Federn, insbesondere auch gerade Federn, miteinander verbunden werden ist es möglich, die Enden entsprechend der vorliegenden Erfindung miteinander zu verbinden um im Verbindungsbereich Druck, Zug, Torsions- und Scherkräfte zu übertragen. Die erfindungsgemäss vorgeschlagene Verbindung ist dabei geeignet sowohl für radial ausgerichtete Federn wie auch für in Umgangsrichtung abgekippte Federn, wie dies insbesondere bei Ringfedern der Fall sein kann.

Selbstverständlich ist es auch weiter möglich, anstelle eines ganzen Windungsumfanges die beiden Endwindungen nur entlang eines gewissen Abschnittes wie beispielsweise mindestens entlang ¼ Windung fest miteinander zu verbinden. Es ist auch möglich, Nahtschweissverbindungen und Punktschweissverbindungen miteinander zu verbinden.

## Patentansprüche

1. Verbindung zweier Federenden, **dadurch gekennzeichnet, dass** die beiden Federenden (4,5) mindestens entlang eines Windungsabschnittes je der beiden Ende miteinander verbunden sind.

2. Verbindung nach Anspruch 1, **dadurch gekennzeichnet, dass** die beiden Enden entlang weitgehendst je einer ganzen Endwindung miteinander fest verbunden sind.

3. Verbindung nach einem der Ansprüche 1 oder 2, **dadurch gekennzeichnet, dass** die Endwindungen mittels Schweissen, Löten, Punktschweissen, Lichtbogenschweissen, etc. fest miteinander verbunden sind.

4. Ringfederstrang mit einer Verbindung nach einem der Ansprüche 1 bis 3, **dadurch gekennzeichnet, dass** er aus einem aus Draht gewickelten Federstrang besteht und dieser Federstrang zu einem Ring geformt ist.

5. Ringfederstrang nach Anspruch 4, **dadurch gekennzeichnet, dass** die Endwindungen des Federringes untrennbar miteinander verbunden sind, wobei die Endwindungen mittels Schweissen oder Löten miteinander verbunden sind.

6. Ringfederstrang nach einem der Ansprüche 4 oder 5, **dadurch gekennzeichnet, dass** die beiden Endwindungen über einen Grossteil der Endwindungen aneinander anliegen bzw. über diesen anliegenden Teil miteinander verschweisst oder verlötet sind, entweder mit mehreren einzelnen Punkten oder mittels einer umlaufenden Naht.

7. Ringfederstrang nach einem der Ansprüche 4 bis 6, **dadurch gekennzeichnet, dass** die einzelnen Windungen des Federringes in Radialrichtung stehen oder von der radialen Richtung abgekippt sind.

8. Ringfederstrang nach einem der Ansprüche 4 bis 7, **dadurch gekennzeichnet, dass** er als Spannelement dient und eine radiale Kraft auf einen Dorn ausübt.

9. Ringfederstrang nach einem der Ansprüche 4 bis 8, **dadurch gekennzeichnet, dass** er als Kontaktelement zwischen einem Dorn und einer Hülse dient.

10. Ringfederstrang nach einem der Ansprüche 4 bis 9, **dadurch gekennzeichnet, dass** er als einrastbares Element zwischen einem mit einer radialen Nut ausgestatteten Dorn und einer mit einer radialen Nut ausgestatteten Hülse dient, wobei die Einrastung entweder lösbar oder ohne Zerstörung nicht mehr lösbar ist.
